# EUROPEAN PATENT APPLICATION

(11) **EP 4 257 337 A1**
(43) Date of publication of application: **11.10.2023**
(21) Application number: 21900435.5
(22) Date of filing: 19.11.2021
(51) Int. Cl.: B29C 55/12, B32B 27/32, B65D 65/40

(54) **BIAXIALLY ORIENTED POLYPROPYLENE RESIN FILM, AND PACKAGING USING SAME**

(30) Priority: 04.12.2020 JP 2020202040
(71) Applicant: TOYOBO CO., LTD., Osaka-shi Osaka 5300001 (JP)
(72) Inventor: KIRIYAMA, Kazuya, Inuyama-shi Aichi 484-8508 (JP); IMAI, Toru, Inuyama-shi Aichi 484-8508 (JP); KINOSHITA, Osamu, Inuyama-shi Aichi 484-8508 (JP)
(74) Representative: Vossius & Partner Patentanwälte Rechtsanwälte mbB
(86) International application number: PCT/JP2021/042605
(87) International publication number: WO 2022/118680

(57) **Abstract**

The present invention has an object that a biaxially oriented polypropylene resin film that has high transparency, stiffness, and antifogging property, and also has both excellent fusion sealability and heat sealability provides a packaging bag that is well-balanced in packaging sandwiches and the like, providing visibility for confirming commodities, inhibiting a packaging from being out of shape, allowing appearance of a content to be made good, and having excellent blocking resistance. A biaxially oriented polypropylene resin film comprising: a base layer (A) formed of a polypropylene-based resin composition containing polypropylene-based resin and polyethylene-based resin; and a surface layer (B) disposed on at least one side of the base layer (A), wherein the biaxially oriented polypropylene resin film satisfies the following conditions a) to d), a) the polypropylene-based resin having the lowest DSC melting point in the polypropylene-based resin composition constituting the base layer (A) has a melting point peak temperature of not lower than 160°C, b) a ratio of an α-olefin monomer-derived component to a total of a propylene monomer-derived component and the α-olefin monomer-derived component in the polypropylene-based resin constituting the base layer (A) is not larger than 0.2 mol%, c) the polyethylene-based resin constituting the base layer (A) is contained in an amount of not smaller than 1 weight% and 25 weight% with respect to 100 weight% of a total of the polypropylene-based resin and the polyethylene-based resin that constitute the base layer (A), and d) the biaxially oriented polypropylene resin film has a haze of not larger than 7%.

## Description

### TECHNICAL FIELD

The present invention relates to a polypropylene-based laminated film that easily maintains a shape of a packaged content and allows the content to be easily confirmed, and is thus suitable for packaging sandwiches and the like, and particularly specifically relates to a polypropylene-based laminated film that has excellent stiffness, antifogging property, and transparency, and also has excellent fusion sealing strength, heat sealing strength, and high speed processability.

### BACKGROUND ART

To date, films in which polypropylene is used have been used for packaging foods and various commodities. The polypropylene films having low water vapor permeability and low oxygen permeability are preferably used.

Particularly, a film used for packaging foods such as sandwiches is required to form a bag that matches a shape of food, and have heat sealability and adhesiveness for forming a bag, content visibility, and printability, and, in addition, inhibit change of a shape of a packaging.

Furthermore, both a fusion sealing process and a heat sealing process can be preferably performed as a heat-sealing method for forming a bag for various users.

However, there has been room for improving mechanical characteristics in a conventional polypropylene-based laminated film for which fusion sealing and heat sealing can be performed (for example, see Patent Literature 1).

Furthermore, since petroleum-derived materials are used, there is a problem also concerning environmental load that has been a problem in recent years.

A biaxially stretched polypropylene film that has heat sealability and includes plant-derived polyethylene containing plant-derived olefin in a base layer is also disclosed (for example, see Patent Literature 2).

However, the film has a large problem with transparency and stiffness.

### CITATION LIST

### PATENT LITERATURE

[PTL 1] WO2017/170330
[PTL 2] Japanese Laid-Open Patent Publication No. 2019-6461

### SUMMARY OF THE INVENTION

### PROBLEMS TO BE SOLVED BY THE INVENTION

The present invention has been made in view of such a problem of the conventional art. That is, a biaxially oriented polypropylene resin film that has excellent stiffness, antifogging property, and transparency, and also has excellent fusion sealing strength, heat sealing strength, and high-speed bag producing properties provides a packaging bag that is excellently balanced in packaging sandwiches and the like, providing visibility for confirming commodities, inhibiting a packaging from being out of shape, and allowing appearance of a content to be made good.

### SOLUTION TO THE PROBLEMS

According to the present invention, as a result of thorough examination in view of the aforementioned problem, a polypropylene-based laminated film having stiffness and antifogging property and further having fusion sealability and heat sealability while maintaining high transparency has been able to be obtained in a case where a surface layer (B) has a thickness in a specific range, or an intermediate layer (C) is laminated between a base layer (A) and the surface layer (B).

That is, the present invention has the following features.

[1] A biaxially oriented polypropylene resin film comprising:
   a base layer (A) formed of a polypropylene-based resin composition containing polypropylene-based resin and polyethylene-based resin; and
   a surface layer (B) disposed on at least one side of the base layer (A), wherein
   the biaxially oriented polypropylene resin film satisfies the following conditions a) to d),
      a) the polypropylene-based resin having the lowest DSC melting point in the polypropylene-based resin composition constituting the base layer (A) has a melting point peak temperature of not lower than 160°C,
      b) a ratio of an α-olefin monomer-derived component to a total of a propylene monomer-derived component and the α-olefin monomer-derived component in the polypropylene-based resin constituting the base layer (A) is not larger than 0.2 mol%,
      c) a melt flow rate (MFR) of the polyethylene-based resin constituting the base layer (A) at 190°C is not lower than 1.5 g/10 minutes and not higher than 10 g/10 minutes, a density of the polyethylene-based resin constituting the base layer (A) is not smaller than 0.910 g/cm³ and not larger than 0.930 g/cm³, and the polyethylene-based resin constituting the base layer (A) is contained in an amount of not smaller than 1 weight% and 25 weight% with respect to 100 weight% of a total of the polypropylene-based resin and the polyethylene-based resin that constitute the base layer (A), and
      d) the biaxially oriented polypropylene resin film has a haze of not larger than 7%.
[2] A biaxially oriented polypropylene resin film comprising:
   a base layer (A) formed of a polypropylene-based resin composition containing polypropylene-based resin and polyethylene-based resin; and
   a surface layer (B) disposed on at least one side of the base layer (A), wherein
   the biaxially oriented polypropylene resin film satisfies the following conditions a) to c),
      a) the polypropylene-based resin constituting the base layer (A) has a mesopentad fraction of not smaller than 95.0% and not larger than 99.5%,
      b) a ratio of an α-olefin monomer-derived component to a total of a propylene monomer-derived component and the α-olefin monomer-derived component in the polypropylene-based resin constituting the base layer (A) is not larger than 0.2 mol%,
      c) a melt flow rate (MFR) of the polyethylene-based resin constituting the base layer (A) at 190°C is not lower than 1.5 g/10 minutes and not higher than 10 g/10 minutes, a density of the polyethylene-based resin constituting the base layer (A) is not smaller than 0.910 g/cm³ and not larger than 0.930 g/cm³, and the polyethylene-based resin constituting the base layer (A) is contained in an amount of not smaller than 1 weight% and 25 weight% with respect to 100 weight% of a total of the polypropylene-based resin and the polyethylene-based resin that constitute the base layer (A), and
      d) the biaxially oriented polypropylene resin film has a haze of not larger than 7%.
[3] The biaxially oriented polypropylene resin film according to the above [1] or [2], comprising an antifogging agent of not smaller than 0.3 weight% and not larger than 1.0 weight%.
[4] The biaxially oriented polypropylene resin film according to any one of the above [1] to [3], wherein
   the biaxially oriented polypropylene resin film satisfies the following e) and f),
   e) a ratio of a butene-1 monomer-derived component to a total of a propylene monomer-derived component and an α-olefin monomer-derived component in a polypropylene-based resin composition constituting the surface layer (B) is not smaller than 5 mol% and not larger than 10 mol%, and
   f) the biaxially oriented polypropylene resin film has a thickness of not larger than 60 µm, and a ratio of a thickness of the surface layer (B) to a thickness of all layers of the biaxially oriented polypropylene resin film is not smaller than 3% and not larger than 12%.
[5] The biaxially oriented polypropylene resin film according to any one of the above [1] to [4], wherein a melt flow rate (MFR) of an entirety of the polypropylene-based resin composition constituting the base layer (A) is not lower than 2.0 g/10 min and not higher than 4.5 g/10 min.
[6] The biaxially oriented polypropylene resin film according to any one of the above [1] to [5], wherein
   the polypropylene-based resin composition constituting the base layer (A) contains a plurality of kinds of polypropylene homopolymers,
   a mesopentad fraction of the polypropylene homopolymer having the highest mesopentad fraction is not lower than 97.5%, and
   a mesopentad fraction of the polypropylene homopolymer having the lowest mesopentad fraction is not higher than 96.5%.
[7] The biaxially oriented polypropylene resin film according to any one of the above [1] to [6], wherein the polypropylene-based resin composition constituting the base layer (A) contains at least one polymer selected from the group consisting of a propylene homopolymer, a propylene-ethylene copolymer, a propylene-butene-1 copolymer, a propylene-ethylene-butene-1 copolymer, and a propylene-pentene-1 copolymer.
[8] A polypropylene-based laminated film according to any one of the above [1] to [7], wherein the biaxially oriented polypropylene resin film has a Young's modulus of not smaller than 1.4 GPa in a longitudinal direction, and has a Young's modulus of not smaller than 2.7 GPa in a width direction.
[9] The polypropylene-based laminated film according to any one of the above [1] to [8], wherein the biaxially oriented polypropylene resin film has a fusion sealing strength of not lower than 15 N/15 mm.
[10] The polypropylene-based laminated film according to any one of the above [1] to [9], wherein the biaxially oriented polypropylene resin film has a heat sealing strength of not lower than 3.0 N/15 mm at 130°C.
[11] The polypropylene-based laminated film according to any one of the above [1] to [10], wherein the biaxially oriented polypropylene resin film has a heat-sealing strength of not lower than 3.5 N/15 mm at 140°C.
[12] A packaging comprising the biaxially oriented polypropylene resin film according to any one of the above [1] to [11].

### EFFECT OF THE INVENTION

The biaxially oriented polypropylene resin film of the present invention that has excellent stiffness, antifogging property, and transparency, and also has excellent fusion sealing strength, heat sealing strength, and high-speed bag producing properties provides a packaging bag that is excellently balanced in packaging sandwiches and the like, providing visibility for confirming commodities, inhibiting a packaging from being out of shape, and allowing appearance of a content to be made good.

### DESCRIPTION OF EMBODIMENTS

A biaxially oriented polypropylene resin film of the present invention has a base layer (A) formed of a polypropylene-based resin composition, and a surface layer (B) formed of a polypropylene-based resin composition and disposed on at least one side of the base layer (A). An intermediate layer (C) can also be laminated between the base layer (A) and a sealing layer (B) as necessary.

### (Base layer (A))

### [Polypropylene-based resin]

In the present invention, the base layer (A) contains polypropylene-based resin. As the polypropylene-based resin, preferably, at least one kind of polymer selected from the group consisting of a propylene homopolymer and a copolymer of propylene and other α-olefin which contains 90 mol% or more of propylene, is mainly used. A content of the at least one kind of polymer selected from the group consisting of a propylene homopolymer and a copolymer of propylene and other α-olefin which contains 90 mol% or more of propylene is preferably not smaller than 95 weight%, more preferably not smaller than 97 weight%, even more preferably not smaller than 98 weight%, and particularly preferably not smaller than 99 weight%.

The propylene homopolymer is preferably isotactic propylene homopolymer which is insoluble in n-heptane.

The n-heptane-insolubility represents an index of crystallinity of polypropylene, and also represents safety for use in packaging foods, and, according to the present invention, preferably complies with n-heptane-insolubility (an eluted amount is not larger than 150 ppm when extraction at 25°C has been performed for 60 minutes [not larger than 30 ppm in a case where the temperature is higher than 100°C in use]) specified in Notification No. 20 of the Ministry of Health and Welfare in February, 1982.

The other α-olefin is preferably C2 to C8 α-olefin such as ethylene, butene-1, pentene-1, hexene-1, and 4-methyl-1-pentene.

In the description herein, the copolymer is preferably a random or block copolymer obtained by polymerizing propylene and one or more kinds of the α-olefins illustrated above, and preferably propylene·ethylene copolymer, propylene·butene-1 copolymer, propylene-ethylene-butene-1 copolymer, or propylene-pentene-1 copolymer.

A content of the polypropylene homopolymer is preferably not smaller than 97 weight%, more preferably not smaller than 98 weight%, even more preferably not smaller than 99 weight%, and particularly preferably 100 weight% with respect to the polypropylene-based resin composition constituting the base layer (A).

In a case where the propylene-α-olefin copolymer containing 90 mol% or more of propylene is mixed and used, a content of the propylene-α-olefin copolymer containing 90 mol% or more of propylene is preferably not larger than 3 weight%, more preferably not larger than 2 weight%, even more preferably not larger than 1 weight%, and particularly preferably 0 weight% with respect to the entirety of the polypropylene-based resin composition used in the base layer (A).

A ratio of an α-olefin monomer-derived component to the total of a propylene monomer-derived component and the α-olefin monomer-derived component in the polypropylene-based resin used in the base layer (A) is preferably not larger than 0.2 mol% from the viewpoint of fusion sealability. Thus, both stiffness and fusion sealability can be achieved at a high level. The ratio is more preferably not larger than 0.1 mol%, even more preferably not larger than 0.05 mol%, and particularly preferably 0 mol%.

In this case, in a case where the polypropylene-based resin constituting the base layer (A) contains a plurality of kinds of polypropylene-based resins, the ratio represents a ratio of an α-olefin monomer-derived component to the total of a propylene monomer-derived component and the α-olefin monomer-derived component of the mixture of the resins.

The melting point peak temperature of polypropylene-based resin having the lowest DSC melting point in the polypropylene-based resin composition constituting the base layer (A) is preferably not lower than 160°C.

The melting point is measured in a method described below in Examples. In a case where the melting point peak temperature of polypropylene-based resin having the lowest DSC melting point is not lower than 160°C, the packaging is unlikely to be out of shape, the film can be more smoothly transported in a high-speed packaging process, and the obtained bag product is unlikely to wrinkle.

The isotactic mesopentad fraction of the polypropylene-based resin constituting the base layer (A) is preferably not lower than 95% from the viewpoint of stiffness. Thus, the packaging is unlikely to be out of shape, the film can be more smoothly transported in a high-speed packaging process, and the obtained bag product is unlikely to wrinkle. The isotactic mesopentad fraction is more preferably not lower than 97.0%. Meanwhile, the isotactic mesopentad fraction is preferably not higher than 99.5% from the viewpoint of film production.

In this case, in a case where the polypropylene-based resin constituting the base layer (A) is formed of a plurality of kinds of polypropylene-based resins, the isotactic mesopentad fraction represents an isotactic mesopentad fraction of the mixture of the resins.

In a case where the polypropylene-based resin is formed of a plurality of kinds of polypropylene-based resins, the mesopentad fraction of polypropylene-based resin having the highest mesopentad fraction is preferably not lower than 97.5%, more preferably not lower than 98.0%, and particularly preferably not lower than 98.5%. Each of the plurality of kinds of polypropylene-based resins is preferably polypropylene homopolymer.

A content of the polypropylene homopolymer having the mesopentad fraction of not lower than 97.5% is preferably not smaller than 30 weight% and not larger than 70 weight%, and more preferably not smaller than 40 weight% and not larger than 60 weight%.

In this case, the mesopentad fraction of polypropylene homopolymer having the lowest mesopentad fraction is preferably not higher than 96.5%, more preferably not higher than 95.5% and particularly preferably not higher than 95.0%.

A content of polypropylene homopolymer having the mesopentad fraction of not higher than 96.5% is preferably not smaller than 30 weight% and not larger than 70 weight%, and more preferably not smaller than 40 weight% and not larger than 60 weight%.

A melt flow rate (MFR) of the polypropylene-based resin used in the base layer (A) is preferably not lower than 2.0 g/10 min from the viewpoint of fusion sealability. Thus, both stiffness and fusion sealability can be achieved at a higher level. From the viewpoint of film elongation, the melt flow rate is preferably not higher than 6.0 g/10 min.

The thickness of the base layer (A) is preferably not smaller than 10 µm, more preferably not smaller than 15 µm, and even more preferably not smaller than 20 µm from the viewpoint of stiffness and water vapor barrier properties of the film although the thickness depends on usage and a use method. From the viewpoint of transparency and influence on the environment, the thickness of the base layer (A) is preferably not larger than 50 µm, more preferably not larger than 45 µm, even more preferably not larger than 40 µm, and particularly preferably not larger than 37 µm.

### [Polyethylene-based resin]

In the present invention, the base layer (A) contains polyethylene-based resin. The polyethylene-based resin is resin containing ethylene as a main component. For example, any ethylene homopolymer such as high-pressure processed low-density polyethylene, linear low-density polyethylene, medium-density polyethylene, and high-density polyethylene, can be used. In addition, a crystalline, or low-crystalline or amorphous random or block copolymer with a monomer such as α-olefin the examples of which include propylene, butene-1, pentene-1, hexene-1, 3-methylbutene-1, 4-methylpentene-1, and octene-1, vinyl acetate, (meth)acrylic acid, and (meth)acrylic ester, or a mixture thereof, can be used.

A content of the polyethylene-based resin is preferably not smaller than 1 weight% and 25 weight% with respect to 100 being the total of the polypropylene-based resin and the polyethylene-based resin that constitute the base layer (A). In a case where the content is not smaller than 1 weight%, heat sealing strength, blocking resistance, and antifogging property are enhanced. The content is more preferably not smaller than 5 weight% and even more preferably 8 weight%. In a case where the content is not larger than 20 weight%, stiffness is likely to be maintained. The content is more preferably not larger than 18 weight% and even more preferably not larger than 15 weight%.

A melting point of the polyethylene-based resin is in a range of preferably not lower than 100°C and not higher than 135°C and more preferably not lower than 105°C and not higher than 130°C from the viewpoint of heat resistance, transparency, mechanical characteristics, and film production properties. The density is measured in accordance with JIS K7112, and is preferably not smaller than 0.90 g/cm³ and not larger than 0.94 g/cm³, and more preferably not smaller than 0.91 g/cm³ and not larger than 0.94 g/cm³.

A melt flow rate (MFR) of the polyethylene-based resin which is measured in a condition of 190°C and a load of 2.16 kg in accordance with ASTM D1238, is preferably not lower than 0.5 g/10 minutes, more preferably not lower than 1 g/10 minutes, and even more preferably not lower than 2 g/10 minutes. From the viewpoint of more stable moldability, the melt flow rate is preferably not higher than 20 g/10 minutes, more preferably not higher than 15 g/10 minutes, and even more preferably not higher than 10 g/10 minutes.

For the polyethylene-based resin, plant-derived polyethylene-based resin is preferably used. A biobased content of the polyethylene-based resin which is measured in accordance with ISO16620 is preferably not smaller than 50% and not larger than 100%, preferably not smaller than 70% and not larger than 100%, and more preferably not smaller than 80% and not larger than 100%.

To date, a film has been considered to become softer if polyethylene-based resin is melted and mixed in polypropylene-based resin as described in Japanese Laid-Open Patent Publication No. 2004-035757, and the melting and mixing have not been proactively performed. However, the inventor of the present invention has found through examination that, by using polypropylene-based resin in which tacticity is high, and an amount of a copolymer component of α-olefin other than propylene is small, even if polyethylene-based resin is melted and mixed, reduction of stiffness is inhibited, and, in the case of an antifogging agent being added, bleed-out thereof is also promoted.

The inventors of the present invention have found the following. Even if polyethylene-based resin is melted and mixed in polypropylene-based resin, the polyethylene-based resin and the polypropylene-based resin are not compatible with each other and independently form a sea-island structure, and a minute surface unevenness is formed on the surface of the surface layer (B). Therefore, the higher a blending ratio of the polyethylene-based resin is, the lower the transparency of the entire film tends to be. However, the minute surface unevenness can be inhibited from being formed on the surface layer (B) by increasing the thickness of the surface layer (B) or providing the intermediate layer (C) containing no polyethylene-based resin or containing a small content of polyethylene-based resin between the base layer (A) and the surface layer (B), so that scattering of light on the surface of the surface layer (B) can be inhibited, and transparency is significantly enhanced.

The minute surface unevenness on the surface layer (B) which is caused by melting and mixing polyethylene-based resin in polypropylene-based resin can be evaluated by a surface roughness Sdq measured by a method described in Examples, unlike surface unevenness caused by inorganic particles mainly contained in polypropylene-based resin.

Furthermore, unexpectedly, by using polyethylene-based resin having a melting point lower than that of polypropylene-based resin, heat sealing strength at a low temperature of about 130°C is likely to be enhanced, and an excellently balanced food packaging film is likely to be obtained.

Moreover, in a case where a plant-derived material is used for the polyethylene-based resin, a food packaging film having small environmental load can also be obtained.

### [Antifogging agent]

The polypropylene-based resin composition constituting the base layer (A) can contain an antifogging agent. Examples of the antifogging agent typically include fatty acid esters of polyhydric alcohols, amines of higher fatty acids, amides of higher fatty acids, and ethylene oxide adducts of amines or amides of higher fatty acid. An amount of such an antifogging agent present in the film is 0.1 to 10 weight% and particularly preferably 0.2 to 5 weight% on the entire layer basis.

When the biaxially oriented polypropylene resin film of the present invention is produced, the antifogging agent is added only to the base layer (A), whereby the antifogging agent is sequentially transferred to the surface layer (B) when the film is produced and when the formed film is stored, and the surface of the film has antifogging property. When greengrocery having characteristics of maintaining a physiological action also after the harvest is packaged, the effect can be exhibited.

In order to maintain excellent antifogging property for a long time during distribution, the packaging is preferably preserved in a room temperature atmosphere rather than in a frozen state. Therefore, in consideration of temperature change during preservation and distribution, an antifogging agent that continues to exhibit antifogging property during repeated temperature change between 5 and 30°C, is preferably selected.

### [Additives]

As long as the effect of the present invention is not degraded, various additives may be blended with the polypropylene-based resin composition constituting the base layer (A) in order to enhance the quality such as slipperiness and antistatic properties. As various additives, for example, a lubricant like wax or metallic soap, a plasticizer, and a processing aid may be blended for enhancing productivity. In addition, a known heat stabilizer that is generally added to a polypropylene-based film, an antioxidant, an antistatic agent, and an ultraviolet absorber may be blended.

### (Surface layer (B))

Polypropylene-based resin used for the polypropylene-based resin composition constituting the surface layer (B) preferably contains a propylene-α-olefin copolymer containing at least butene-1.

By using the propylene-α-olefin copolymer containing at least butene-1, even if a ratio of a copolymer component is relatively low, a melting point of the propylene-α-olefin copolymer can be lowered, and mixture of the surface layers (B) with each other is likely to be promoted, whereby high achievable heat sealing strength can be exhibited. Even if the surface layer (B) has a reduced thickness, a sufficient achievable heat sealing strength is likely to be obtained.

An α-olefin other than butene-1 is preferably C2 to C8 α-olefin such as ethylene, pentene-1, hexene-1, and 4-methyl-1-pentene. The propylene-α-olefin copolymer copolymer containing at least butene-1 is preferably a random or block copolymer obtained by polymerizing propylene and one or more kinds of α-olefins each containing at least butene-1, and is preferably at least one kind of copolymer selected from the group consisting of propylene-butene-1 copolymer and propylene·ethylene·butene-1 copolymer.

The polypropylene-based resin composition constituting the surface layer (B) may contain a propylene homopolymer or a copolymer which is formed of propylene and an α-olefin other than butene-1 and which contains 90 mol% or more of propylene. However, the content thereof in the polypropylene-based resin composition constituting the surface layer (B) is preferably not larger than 10 weight%, more preferably not larger than 5 weight%, even more preferably not larger than 3 weight%, and particularly preferably 0 weight%.

The content of the propylene-α-olefin copolymer containing at least butene-1 in the polypropylene-based resin composition constituting the surface layer (B) is preferably not smaller than 90 weight%.

The propylene-α-olefin copolymer containing at least butene-1 in the polypropylene-based resin composition constituting the surface layer (B) is preferably propylene·butene-1 copolymer and/or propylene-ethylene-butene-1 copolymer, and more preferably propylene-ethylene-butene-1 copolymer.

A content of a butene-1 monomer-derived component is preferably not smaller than 5 mol% with respect to the total of a propylene monomer-derived component and an α-olefin monomer-derived component in the polypropylene-based resin composition constituting the surface layer (B) in order to exhibit high fusion sealing strength, and is more preferably not smaller than 5.5 mol% and even more preferably not smaller than 5.7 mol%.

In a case where the content of a butene-1 monomer-derived component is not smaller than 5 mol% with respect to the total of a propylene monomer-derived component and an α-olefin monomer-derived component in the polypropylene-based resin composition constituting the surface layer (B), growth of spherulites can be inhibited.

This is because the following has been found. In order to stretch the base layer (A) constituted by the polypropylene-based resin composition having a high melting point, a temperature for the stretching needs to be increased. However, in a case where the film stretched by increasing the temperature for stretching is slowly cooled (for example, when discharged from a tenter stretching machine), a spherulite is likely to grow in the polypropylene-based resin composition constituting the surface layer (B), and a large spherulite is likely to be generated. If a spherulite is in a melted portion after fusion sealing, an interface is generated and fusion sealing strength is likely to be lowered. This tendency is more significant since, if the melting point of the polypropylene-based resin composition constituting the base layer (A) is higher, stretching is performed at a higher temperature.

However, if a content of a butene-1 monomer-derived component is excessively large, the shape of the sealed portion is likely to become non-uniform. Therefore, the content of a butene-1 monomer-derived component is preferably not larger than 10 mol%, more preferably not larger than 9.5 mol%, even more preferably not larger than 9 mol%, particularly preferably not larger than 8 mol%, and most preferably not larger than 6.5 mol% with respect to the total of a propylene monomer-derived component, an ethylene monomer-derived component, and the butene-1 monomer-derived component in the polypropylene-based resin composition constituting the surface layer (B).

In a case where the polypropylene-based resin composition constituting the surface layer (B) is at least one kind of copolymer selected from the group consisting of propylene-butene-1 copolymer and propylene-ethylene-butene-1 copolymer, the content of a butene-1 monomer-derived component is preferably not smaller than 5 mol% with respect to the total of a propylene monomer-derived component, an ethylene monomer-derived component, and the butene-1 monomer-derived component in order to exhibit high fusion sealing strength, and more preferably not smaller than 5.5 mol%, and even more preferably not smaller than 5.7 mol%.

However, if a content of a butene-1 monomer-derived component is excessively large, the shape of the sealed portion is likely to become non-uniform. Therefore, the content of a butene-1 monomer-derived component is preferably not larger than 10 mol%, more preferably not larger than 9.5 mol%, even more preferably not larger than 9 mol%, particularly preferably not larger than 8 mol%, and most preferably not larger than 6.5 mol% with respect to the total of a propylene monomer-derived component, an ethylene monomer-derived component, and the butene-1 monomer-derived component in the polypropylene-based resin composition constituting the surface layer (B).

If a ratio of the α-olefin monomer-derived component to the total of the propylene monomer-derived component and the α-olefin monomer-derived component in the entirety of the polypropylene-based resin composition constituting the surface layer (B) is large, separation between the base layer (A) and the surface layer (B) at an interface therebetween is likely to occur.

Therefore, the ratio of the α-olefin monomer-derived component in the polypropylene-based resin used for the polypropylene-based resin composition constituting the surface layer (B) is preferably not larger than 20 mol%.

For the polypropylene-based resin composition constituting the surface layer (B), a single or a plurality of propylene-α-olefin copolymers can be used. In a case where a plurality of propylene-α-olefin copolymers are contained, propylene-α-olefin copolymer having the lowest DSC melting point in the polypropylene-based resin composition preferably has a melting point peak temperature of not lower than 100°C. In this case, a spherulite is unlikely to be in a melted portion after fusion sealing, and fusion sealing strength is unlikely to be lowered.

As long as the effect of the present invention is not degraded, various additives may be blended with the surface layer (B) in order to enhance the quality such as slipperiness and antistatic properties. As various additives, for example, a lubricant like wax or metallic soap, a plasticizer, and a processing aid may be blended for enhancing productivity. In addition, a known heat stabilizer that is generally added to a polypropylene-based film, an antioxidant, an antistatic agent, and an ultraviolet absorber may be blended.

Furthermore, inorganic or organic particulates may be blended for assuring blocking resistance or slipperiness of the film.

The surface layer (B) preferably has SRa ranging from 0.03 to 0.10 from the viewpoint of slipperiness.

Examples of the inorganic particulates include silicon dioxide, calcium carbonate, titanium dioxide, talc, kaolin, mica, and zeolite, and the shape thereof may be any kind of shape such as a spherical shape, an ellipsoidal shape, a conic shape, and an indefinite shape, and the diameter of the particulate can be used as desired depending on usage and a use method of the film, and the particulates having the diameters can be blended.

The organic particulates may be crosslinked particles made of acryl, methyl acrylate, styrene-butadiene, or the like. The various shapes and sizes can be used similarly to the inorganic particulates. Various surface treatments may be performed on surfaces of the inorganic or organic particulates. One kind of the particulates can be used, or two or more kinds of the particulates can be used in combination. The same applies to the surface layer (B) described below.

### (Intermediate layer (C))

In the present invention, in a case where the intermediate layer (C) formed of a polypropylene-based resin composition mainly containing polypropylene-based resin and containing no polyethylene-based resin or containing a small content of polyethylene-based resin is disposed between the base layer (A) and the surface layer (B), transparency can be further enhanced. The content of the polyethylene-based resin is preferably not larger than 1 weight%.

### [Polypropylene-based resin]

In the present invention, the intermediate layer (C) contains polypropylene-based resin. As the polypropylene-based resin, preferably, at least one kind of polymer selected from the group consisting of a propylene homopolymer and a copolymer of propylene and other α-olefin which contains 90 mol% or more of propylene, is mainly used. A content of the at least one kind of polymer selected from the group consisting of a propylene homopolymer and a copolymer of propylene and other α-olefin which contains 90 mol% or more of propylene is preferably not smaller than 95 weight%, more preferably not smaller than 97 weight%, even more preferably not smaller than 98 weight%, and particularly preferably not smaller than 99 weight%.

The propylene homopolymer is preferably isotactic propylene homopolymer which is insoluble in n-heptane.

The n-heptane-insolubility represents an index of crystallinity of polypropylene, and also represents safety for use in packaging foods, and, according to the present invention, preferably complies with n-heptane-insolubility (an eluted amount is not larger than 150 ppm when extraction at 25°C has been performed for 60 minutes [not larger than 30 ppm in a case where the temperature is higher than 100°C in use]) specified in Notification No. 20 of the Ministry of Health and Welfare in February, 1982.

The other α-olefin is preferably C2 to C8 α-olefin such as ethylene, butene-1, pentene-1, hexene-1, and 4-methyl-1-pentene. In the description herein, the copolymer is preferably a random or block copolymer obtained by polymerizing propylene and one or more kinds of the α-olefins illustrated above, and preferably propylene·ethylene copolymer, propylene-butene-1 copolymer, propylene-ethylene-butene-1 copolymer, or propylene-pentene-1 copolymer.

A content of the polypropylene homopolymer is preferably not smaller than 97 weight%, more preferably not smaller than 98 weight%, even more preferably not smaller than 99 weight%, and particularly preferably 100 weight% with respect to the polypropylene-based resin composition constituting the intermediate layer (C).

In a case where the propylene-α-olefin copolymer containing 90 mol% or more of propylene is mixed and used, a content of the propylene-α-olefin copolymer containing 90 mol% or more of propylene with respect to the entirety of the polypropylene-based resin composition used for the intermediate layer (C) is preferably not larger than 3 amount%, more preferably not larger than 2 weight%, even more preferably not larger than 1 weight%, and particularly preferably 0 weight%.

A ratio of an α-olefin monomer-derived component to the total of a propylene monomer-derived component and the α-olefin monomer-derived component in the polypropylene-based resin used in the intermediate layer (C) is preferably not larger than 0.2 mol% from the viewpoint of fusion sealability. Thus, both stiffness and fusion sealability can be achieved at a high level. The ratio is more preferably not larger than 0.1 mol%, even more preferably not larger than 0.05 mol%, and particularly preferably 0 mol%.

In this case, in a case where the polypropylene-based resin constituting the intermediate layer (C) contains a plurality of kinds of polypropylene-based resins, the ratio represents a ratio of an α-olefin monomer-derived component to the total of a propylene monomer-derived component and the α-olefin monomer-derived component of the mixture of the resins.

In a case where the polypropylene-based resin constituting the intermediate layer (C) contains a plurality of kinds of polypropylene-based resins, polypropylene-based resin having the lowest DSC melting point in the polypropylene-based resin composition constituting the intermediate layer (C) preferably has a melting point peak temperature of not lower than 160°C.

The melting point is measured in the method described below in Examples. In a case where the polypropylene-based resin having the lowest DSC melting point has a melting point peak temperature of not lower than 160°C, the packaging is inhibited from being out of shape, the film can be more smoothly transported in a high-speed packaging process, and the obtained bag product is unlikely to wrinkle.

The isotactic mesopentad fraction of the polypropylene-based resin constituting the intermediate layer (C) is preferably not lower than 95% from the viewpoint of stiffness. Thus, the packaging is inhibited from being out of shape, the film can be more smoothly transported in a high-speed packaging process, and the obtained bag product is unlikely to wrinkle. The isotactic mesopentad fraction is more preferably not lower than 97.0%. Meanwhile, the isotactic mesopentad fraction is preferably not higher than 99.5% from the viewpoint of film production.

In this case, in a case where the polypropylene-based resin constituting the intermediate layer (C) is formed of a plurality of kinds of polypropylene-based resins, the isotactic mesopentad fraction represents an isotactic mesopentad fraction of the mixture of the resins.

In a case where the polypropylene-based resin constituting the intermediate layer (C) contains a plurality of kinds of polypropylene-based resins, a mesopentad fraction of polypropylene-based resin having the highest mesopentad fraction is preferably not lower than 97.5%, more preferably not lower than 98.0%, and particularly preferably not lower than 98.5%. A content of the polypropylene homopolymer having the mesopentad fraction of not lower than 97.5% is preferably not smaller than 30 weight% and not larger than 70 weight%, and more preferably not smaller than 40 weight% and not larger than 60 weight%.

In this case, the mesopentad fraction of polypropylene homopolymer having the lowest mesopentad fraction is preferably not higher than 96.5%, more preferably not higher than 95.5%, and particularly preferably not higher than 95.0%.

A content of the polypropylene homopolymer having a mesopentad fraction of not higher than 96.5% is preferably not smaller than 30 weight% and not larger than 70 weight%, and more preferably not smaller than 40 weight% and not larger than 60 weight%.

A melt flow rate (MFR) of the polypropylene-based resin used in the intermediate layer (C) is preferably not lower than 2.0 g/10 min from the viewpoint of fusion sealability. Thus, both stiffness and fusion sealability can be achieved at a higher level. From the viewpoint of film elongation, the melt flow rate is preferably not higher than 6.0 g/10 min.

The thickness of the intermediate layer (C) is preferably not smaller than 1 µm, more preferably not smaller than 2 µm, even more preferably not smaller than 2.5 µm, still more preferably not smaller than 3.0 µm, and most preferably not smaller than 3.5 µm from the viewpoint of transparency of the film although the thickness depends on usage and a use method. From the viewpoint of influence on the environment, the thickness is preferably not larger than 10 µm, more preferably not larger than 7 µm, even more preferably not larger than 6 µm, and particularly preferably not larger than 5 µm.

In the polypropylene-based resin composition constituting the intermediate layer (C), a content of the same kind of polyethylene-based resin as used in the base layer (A) is preferably not larger than 1 weight%, more preferably not larger than 0.7 weight%, even more preferably not larger than 0.3 weight%, and most preferably 0 weight% with respect to the entirety of the polypropylene-based resin composition.

As long as the effect of the present invention is not degraded, various additives may be blended with the intermediate layer (C) in order to enhance the quality such as slipperiness and antistatic properties. As various additives, for example, a lubricant like wax or metallic soap, a plasticizer, and a processing aid may be blended for enhancing productivity. In addition, a known heat stabilizer that is generally added to a polypropylene-based film, an antioxidant, an antistatic agent, and an ultraviolet absorber may be blended. Furthermore, inorganic or organic particulates can be blended for assuring blocking resistance or slipperiness of the film.

### (Film layer configuration)

The biaxially oriented polypropylene resin film of the present invention has the base layer (A) formed of the polypropylene-based resin composition, and the surface layer (B) formed of the polypropylene-based resin composition and disposed on at least one side of the base layer (A). The intermediate layer (C) can also be laminated between the base layer (A) and the sealing layer (B) as necessary.

A ratio of the thickness of the surface layer (B) to the thickness of all the layers of the biaxially oriented polypropylene resin film is preferably not larger than 10% from the viewpoint of fusion sealing strength, and is more preferably not larger than 9.5%, even more preferably not larger than 8%, and particularly preferably not larger than 6%. In a case where the ratio of the thickness of the surface layer (B) is not larger than 10%, an amount of spherulites at a melted portion which are called poly lumps at a fusion-sealed portion, is reduced, and a ratio of low melting point resin is also reduced, and fusion sealing strength is unlikely to be lowered.

From the viewpoint of heat sealing strength, a ratio of the thickness of the surface layer (B) is preferably not smaller than 4%.

In a case where the intermediate layer (C) containing no polyethylene-based resin or containing a small content thereof is not disposed between the base layer (A) and the surface layer (B), the ratio of the thickness of the surface layer (B) is extremely preferably not smaller than 7.5% and most preferably not smaller than 8.5% from the viewpoint of transparency.

In a case where the intermediate layer (C) is disposed between the base layer (A) and the surface layer (B), a ratio of the thickness of the surface layer (B) to the thickness of all the layers of the biaxially oriented polypropylene resin film is preferably not larger than 10% from the viewpoint of fusion sealing strength, and is more preferably not larger than 9.5%, even more preferably not larger than 8 %, still more preferably not larger than 6%, particularly preferably not larger than 5.5%, and most preferably not larger than 5.0%. The ratio is more preferably not smaller than 5.0%, even more preferably not smaller than 5.5%, and still more preferably not smaller than 6.5%.

A ratio of the thickness of the intermediate layer (C) to the thickness of all the layers of the biaxially oriented polypropylene resin film is preferably not larger than 10% from the viewpoint of fusion sealing strength, and is more preferably not larger than 9.5%, even more preferably not larger than 8%, and particularly preferably not larger than 6%. In a case where the ratio of the thickness of the intermediate layer (C) is not larger than 10%, an amount of spherulites at a melted portion which are called poly lumps at a fusion-sealed portion, is reduced, and a ratio of low melting point resin is also reduced, and fusion sealing strength is unlikely to be lowered.

The ratio of the thickness of the intermediate layer (C) is preferably not smaller than 2.0%, more preferably not smaller than 3.0%, and even more preferably not smaller than 3.5% from the viewpoint of heat sealing strength.

From the viewpoint of transparency, the surface roughness Sdq of the surface layer (B) which is measured in a method described in Examples is preferably not larger than 35 (µm/mm), more preferably not larger than 30 (µm/mm), even more preferably not larger than 27 (µm/mm), particularly preferably not larger than 24 (µm/mm), and most preferably not larger than 21 (µm/mm).

In the polypropylene-based resin composition constituting the surface layer (B), a content of the same kind of polyethylene-based resin as used in the base layer (A) is preferably not larger than 1 weight%, more preferably not larger than 0.7 weight%, even more preferably not larger than 0.3 weight%, and most preferably 0 weight% with respect to the entirety of the polypropylene-based resin composition.

Furthermore, unexpectedly, even if the content of the polyethylene-based resin in the polypropylene-based resin composition constituting the surface layer (B) is 0%, heat sealing strength at a low temperature of about 130°C is likely to be also enhanced, and an excellently balanced food packing film is likely to be obtained.

### (Thickness of all layers of film)

In the present invention, the thickness of all the layers of the biaxially oriented polypropylene resin film is preferably not smaller than 10 µm, more preferably not smaller than 15 µm, and even more preferably not smaller than 20 µm from the viewpoint of film strength or adhesiveness although the thickness depends on usage and a use method.

From the viewpoint of high-speed packaging processability or visibility, the thickness is preferably not larger than 60 µm, even more preferably not larger than 50 µm, particularly preferably not larger than 45 µm, and most preferably not larger than 40 µm.

### (Method for producing biaxially oriented polypropylene resin film)

Examples of a method for producing the biaxially oriented polypropylene resin film of the present invention include a method in which melt-lamination is performed in a T-die method, an inflation method, or the like by using an extruder corresponding to the number of laminations, cooling is thereafter performed by a cooling roll method, a water cooling method, or an air cooling method to form a laminated film, and stretching is performed by a sequential biaxial stretching method, a simultaneous biaxial stretching method, a tube stretching method, or the like.

A condition of production by a sequential biaxial stretching method is, for example, a condition in which resin that is melt-extruded by a T-type die is cooled and solidified by a casting machine, to produce a raw sheet. At this time, a temperature of a melt-casting roll is preferably set between 15°C and 40°C in order to reduce crystallization of resin and enhance transparency.

Subsequently, the raw sheet is heated to a temperature suitable for stretching, and is thereafter stretched in the sheet flowing direction by utilizing difference between speeds of stretching rolls. At this time, the stretch ratio is preferably set between three times and six times in consideration of stable production without non-uniform stretching.

Subsequently, both ear portions of the longitudinally stretched sheet are held by tenter clips, and the sheet is sequentially stretched while being extended in the direction perpendicular to the sheet flowing direction while the sheet is heated to a temperature suitable for stretching with hot air. At this time, a transverse stretch ratio is preferably set between seven times and ten times in consideration of change of a thickness and productivity.

Subsequently, while both ear portions of the transversely stretched film are held by tenter clips, heat treatment is preferably performed in a range of 160°C to 170°C. The time of the heat treatment is preferably set between two and ten seconds. While both the ear portions are held by tenter clips, loosening is preferably performed in the film width direction in a range of 1 to 10%.

Subsequently, the surface tension of the surface of the surface layer (B) is preferably enhanced by subjecting the surface of the surface layer (B) to corona discharge treatment by a corona discharge treatment machine. Thus, antifogging property can be enhanced.

In the biaxially oriented polypropylene resin film of the present invention, the base layer (A) is preferably subjected to surface treatment in order to enhance printability, laminatability, and the like. Examples of the surface treatment method include, but is not particularly limited to, corona discharge treatment, plasma treatment, flame treatment, and acid treatment. Corona discharge treatment, plasma treatment, or flame treatment, which can be continuously performed and can be easily performed before a taking-up step during the film production process, is preferably performed.

### (Film characteristics)

The biaxially oriented polypropylene resin film of the present invention preferably has the following characteristics. In the description herein, the longitudinal direction represents a film flowing direction in a process step from casting a raw material resin composition to taking up the stretched film, and the width direction represents the direction perpendicular to the flowing direction. The same applies to the following characteristics.

### (Young's modulus)

In the biaxially oriented polypropylene resin film of the present invention, the initial Young's modulus in the longitudinal direction as obtained by a measurement method described below is preferably not smaller than 1.3 GPa. In this case, the film is likely to have excellent mechanical suitability, the bag product is likely to have high stiffness, and outer appearance is likely to be good. The initial Young's modulus in the longitudinal direction is more preferably not smaller than 1.4 GPa, even more preferably 1.6 GPa, still more preferably not smaller than 1.8 GPa, and particularly preferably not smaller than 1.9 GPa. As the upper limit value, about 2.5 GPa is sufficient.

In the biaxially oriented polypropylene resin film of the present invention, the initial Young's modulus in the width direction as obtained in a measurement method described below is preferably not smaller than 2.5 GPa. The initial Young's modulus in the width direction is more preferably not smaller than 3.0 GPa, even more preferably not smaller than 3.3 GPa, and still more preferably not smaller than 3.6 GPa. As the upper limit value, about 4.7 GPa is sufficient.

### (5% elongation stress)

In the biaxially oriented polypropylene resin film of the present invention, 5% elongation stress in the longitudinal direction as obtained by a measurement method described below is preferably not smaller than 26 MPa. In this case, the film is likely to have excellent mechanical suitability, the bag product is likely to have high stiffness, and outer appearance is likely to be good. The 5% elongation stress in the longitudinal direction is more preferably not smaller than 28 MPa, even more preferably not smaller than 33 MPa, and still more preferably not smaller than 35 MPa. As the upper limit value, about 45 MPa is sufficient.

In the biaxially oriented polypropylene resin film of the present invention, the 5% elongation stress in the width direction as obtained by a measurement method described below is preferably not smaller than 80 MPa. The 5% elongation stress in the width direction is more preferably not smaller than 90 MPa and even more preferably not smaller than 100 MPa. As the upper limit value, about 120 MPa is sufficient.

### (Breaking strength)

In the biaxially oriented polypropylene resin film of the present invention, the breaking strength in the longitudinal direction as obtained by a measurement method described below is preferably not smaller than 100 MPa. In this case, the film is unlikely to be broken during processing of the film. The breaking strength in the longitudinal direction is more preferably not smaller than 110 MPa, even more preferably not smaller than 125 MPa, still more preferably not smaller than 130 MPa, and still more preferably not smaller than 135 MPa. As the upper limit value, about 150 MPa is sufficient.

In the biaxially oriented polypropylene resin film of the present invention, the breaking strength in the width direction as obtained by a measurement method described below is preferably not smaller than 200 MPa. The breaking strength in the width direction is more preferably not smaller than 210 MPa, even more preferably not smaller than 235 MPa, still more preferably not smaller than 250 MPa, particularly preferably not smaller than 270 MPa, and most preferably not smaller than 280 MPa. As the upper limit value, about 390 MPa is sufficient.

### (Elongation at break)

In the biaxially oriented polypropylene resin film of the present invention, the elongation at break in the longitudinal direction as obtained by a measurement method described below is preferably not smaller than 205%. In this case, the film is unlikely to be broken during processing of the film. The elongation at break in the longitudinal direction is more preferably not smaller than 210%, even more preferably not smaller than 215%, still more preferably not smaller than 220%, and still more preferably not smaller than 230%. As the upper limit value, about 320% is sufficient.

In the biaxially oriented polypropylene resin film of the present invention, the elongation at break in the width direction as obtained by a measurement method described below is preferably not smaller than 40%. The elongation at break in the width direction is more preferably not smaller than 45%, even more preferably not smaller than 47%, and still more preferably not smaller than 50%. As the upper limit value, about 60% is sufficient.

### (Heat shrinkage rate)

In the biaxially oriented polypropylene resin film of the present invention, the heat shrinkage rate in the longitudinal direction as obtained by a measurement method described below is preferably not larger than 3.5%. In this case, thermal damage is unlikely to occur during processing of the film, and the film is unlikely to wrinkle. The heat shrinkage rate in the longitudinal direction is more preferably not larger than 3.0% and even more preferably not larger than 2.7%. As the lower limit value, about 1.0% is sufficient.

In the biaxially oriented polypropylene resin film of the present invention, the heat shrinkage rate in the width direction as obtained by a measurement method described below is preferably not larger than 2.0%. The heat shrinkage rate in the width direction is more preferably not larger than 1.7%, even more preferably not larger than 1.4%, still more preferably not larger than 1.0%, and particularly preferably not larger than 0.8%. The lower limit value is 0.0%.

### (Haze)

In the biaxially oriented polypropylene resin film of the present invention, the haze as obtained by a measurement method described below is preferably not larger than 7%. In this case, the lower the value is, the more assuredly the contents can be confirmed even through the film of the packaging bag. The haze is more preferably not larger than 6%, even more preferably not larger than 5%, still more preferably not larger than 4%, and particularly preferably not larger than 2%. As the lower limit value, about 1% is sufficient.

### (Glossiness)

In the biaxially oriented polypropylene resin film of the present invention, the glossiness as obtained by a measurement method described below is preferably not smaller than 100% in each of the longitudinal direction and the width direction. In this case, the film surface is perceived to be highly glossy and is likely to look beautiful. The glossiness is more preferably not smaller than 110%, even more preferably not smaller than 40%, still more preferably not smaller than 115%, particularly preferably not smaller than 120%, and particularly preferably not smaller than 125%. As the upper limit value, about 140% is sufficient.

### (Coefficient of dynamic friction)

In the biaxially oriented polypropylene resin film of the present invention, the coefficient of dynamic friction as obtained by a measurement method described below is preferably not larger than 0.30 in each of the longitudinal direction and the width direction. In this case, the film has good slipperiness, and loss is unlikely to occur during processing. The coefficient of dynamic friction is more preferably not larger than 0.25, even more preferably not larger than 0.22, and still more preferably not larger than 0.20. As the lower limit value, about 0.10 is sufficient.

### (Wetting tension)

In the biaxially oriented polypropylene resin film of the present invention, the melt wetting tension as obtained by a measurement method described below is preferably not smaller than 35 mN/m. In this case, the film is likely to have good printing suitability. The wetting tension is more preferably not smaller than 37 mN/m, even more preferably not smaller than 39 mN/m, and still more preferably not smaller than 40 mN/m. As the upper limit value, about 43 mN/m is sufficient.

### (Surface specific resistance)

In the biaxially oriented polypropylene resin film of the present invention, the surface resistance as obtained by a measurement method described below is preferably not larger than 15 LogΩ. In this case, the film exhibits good antistatic performance, and static electricity is unlikely to be generated. The surface resistance is more preferably not larger than 13 LogΩ, even more preferably not larger than 12 LogO, still more preferably not larger than 11.5 LogΩ, and particularly preferably not larger than 11 LogΩ. As the lower limit value, about 10 LogΩ is sufficient.

### (Antifogging property)

In a polypropylene-based resin film of the present invention, antifogging property as obtained by a measurement method described below preferably has a rank evaluated as rank 4 or smaller. The antifogging property more preferably has a rank evaluated as rank 3 or smaller and even more preferably a rank evaluated as rank 2 or smaller.

### (Water vapor permeability)

In the biaxially oriented polypropylene resin film of the present invention, water vapor permeability as obtained by a measurement method described below is preferably not larger than 7.0 (g/(m²·d)). In this case, preservability of the contents in the packaging bag is likely to be high. The water vapor permeability is more preferably not larger than 6.5 (g/(m²·d)), even more preferably not larger than 6.0 (g/(m²·d)), still more preferably not larger than 5.5 (g/(m²-d)), and particularly preferably not larger than 5.0 (g/(m²·d)). As the lower limit value, about 4.0 (g/(m²·d)) is sufficient.

### (Heat sealing start-up temperature)

In the biaxially oriented polypropylene resin film of the present invention, the heat sealing start-up temperature of the surface layer (B) is preferably not higher than 130°C, more preferably not higher than 129°C, and even more preferably not higher than 128°C. In a case where the heat sealing start-up temperature of the surface layer (B) is not higher than 130°C, sufficient heat sealing strength is maintained even at a low heat sealing temperature of about 130°C and heat sealing is allowed to be performed. Therefore, operation can be performed at a high speed in automatic packaging, adhesiveness at a sealed portion is excellent, heat sealing can be performed at a low temperature and the entirety of the film is thus unlikely to shrink, a heat sealed portion is unlikely to wrinkle, and the adhesiveness at the heat sealed portion is further enhanced. However, the heat sealing start-up temperature of the surface layer (B) is preferably not lower than 120°C from the viewpoint of fusion sealing strength. The heat sealing start-up temperature of the surface layer (B) is more preferably not lower than 122°C, even more preferably 124°C, and particularly preferably 126°C.

### (Achievable heat sealing strength at 130°C)

In the biaxially oriented polypropylene resin film of the present invention, achievable heat sealing strength at 130°C in each of the longitudinal direction and the width direction as obtained by a measurement method described below is preferably not lower than 2.7 N/15 mm in order to prevent dropping of contents. The achievable heat sealing strength at 130°C is more preferably not lower than 3.0 N/15 mm, even more preferably not lower than 3.5 N/15 mm, still more preferably not lower than 4.0 N/15 mm, and particularly preferably not lower than 4.5 N/15 mm. As the upper limit value, about 6.0 N/15 mm is sufficient.

### (Achievable heat sealing strength at 140°C)

In the biaxially oriented polypropylene resin film of the present invention, the achievable heat sealing strength at 140°C in each of the longitudinal direction and the width direction as obtained by a measurement method described below is preferably not lower than 3.3 N/15 mm in order to prevent dropping of contents. The achievable heat sealing strength at 140°C is more preferably not lower than 3.5 N/15 mm, even more preferably not lower than 4.0 N/15 mm, and still more preferably not lower than 4.5 N/15 mm. The upper limit value is about 6.0 N/15 mm.

### (Blocking)

In the biaxially oriented polypropylene resin film of the present invention, the blocking as obtained by a measurement method described below is preferably not larger than 40 mN/200 mm. In this case, films are unlikely to adhere to each other, and processability is likely to be excellent. The blocking is more preferably not larger than 35 mN/200 mm, even more preferably not larger than 30 mN/200 mm, still more preferably not larger than 25 mN/200 mm, and particularly preferably not larger than 20 mN/200 mm. As the lower limit value, about 10 mN/ is sufficient.

### (Ring crush)

In the biaxially oriented polypropylene resin film of the present invention, the ring crush in the longitudinal direction as obtained by a measurement method described below is preferably not smaller than 0.16 Kg, more preferably not smaller than 0.18 Kg, still more preferably not smaller than 0.20 Kg, particularly preferably not smaller than 0.25 Kg, more particularly preferably not smaller than 0.30 Kg, and most preferably not smaller than 0.35 Kg. The upper limit value is about 0.45 Kg.

In the biaxially oriented polypropylene resin film of the present invention, the ring crush in the width direction as obtained by a measurement method described below is preferably not smaller than 0.18 Kg. In this case, the film is likely to have good self-standing properties after a bag is formed from the film. The ring crush in the width direction is more preferably not smaller than 0.20 Kg, even more preferably not smaller than 0.25 Kg, particularly preferably not smaller than 0.27 Kg, more particularly preferably not smaller than 0.29 Kg, and most preferably not smaller than 0.32 Kg. As the upper limit value, about 0.60 Kg is sufficient.

### (Fusion sealing strength)

In the biaxially oriented polypropylene resin film of the present invention, the fusion sealing strength as obtained by a measurement method described below is preferably not lower than 15 N/15 mm. In this case, the film is unlikely to be broken after a bag is formed from the film. The fusion sealing strength is more preferably not lower than 17 N/15 mm, even more preferably not lower than 19 N/15 mm, and still more preferably not lower than 21 N/15 mm. As the upper limit value, about 30 N/15 mm is sufficient.

### (Sdq)

In the biaxially oriented polypropylene resin film of the present invention, the surface roughness Sdq as obtained by a measurement method described below is preferably not larger than 30 µm/mm. In this case, the surface is likely to be smooth, and transparency is likely to be high. The Sdq is more preferably not larger than 28 µm/mm, even more preferably not larger than 25 µm/mm, still more preferably not larger than 23 µm/mm, and particularly preferably not larger than 20 µm/mm.

### (SRa)

In the biaxially oriented polypropylene resin film of the present invention, the surface roughness SRa as obtained by a measurement method described below is preferably not larger than 0.120 µm. In this case, the surface is likely to be smooth, and transparency is likely to be high. The SRa is more preferably not larger than 0.100 µm, even more preferably not larger than 0.080 µm, still more preferably not larger than 0.070 µm, and particularly preferably not larger than 0.050 µm.

### (High speed packaging suitability)

In the biaxially oriented polypropylene resin film of the present invention, the high speed packaging suitability as obtained by a measurement method described below is preferably evaluated as being good or fair. The high speed packaging suitability is more preferably good. In a case where high speed packaging suitability is evaluated as being good or fair, production cost is likely to be excellent.

### EXAMPLES

Specific examples of the present invention will be further described below by means of Examples. However, the present invention is not limited to Examples described below within the gist of the present invention. In the description herein, the characteristics were evaluated in the following methods.

### (1) Ratio of α-olefin monomer-derived component (mol%)

A content of each of propylene, butene-1, and ethylene in the propylene-ethylene copolymer, the propylene-butene-1 copolymer, and the propylene-ethylene-butene-1 copolymer was determined by a 13C-NMR spectrum method in a method described in P615-617 of the "Polymer Analysis Handbook" (published by KINOKUNIYA COMPANY, LTD in 1995). The contents can also be determined by an IR spectrum method in the method described at "(i) Random Copolymer" in Page 256 of this handbook.

As a ratio of the α-olefin monomer-derived component of the polypropylene-based resin formed of a mixture of a plurality of polypropylene resins, a value obtained in the measurement by the above-described method was used.

### (2) DSC melting point

A DSC curve of a polyolefin-based resin film was obtained by using Shimadzu differential scanning calorimeter DSC-60 manufactured by SHIMADZU CORPORATION, and a temperature at the maximum melting peak in the DSC curve was set as the melting point. The start temperature was 30°C, the temperature increase rate was 5°C/min, and the end temperature was 180°C. Five samples were measured and the average value was calculated.

### (3) Mesopentad fraction

The mesopentad fraction ([mmmm]%) of the polypropylene resin was measured by using 13C-NMR. The mesopentad fraction was calculated in accordance with the method described in Zambelli et al., Macromolecules, Volume 6, p. 925 (1973). A sample of 200 mg was dissolved at 135°C in a mixture of o-dichlorobenzene-d4 and benzene-d6 at a ratio of 8:2 , and then the 13C-NMR measurement was performed at 110°C in a manner in which AVANCE500 manufactured by BRUKER was used. Five samples were measured and the average value was calculated.

As the mesopentad fraction of the polypropylene-based resin formed of a mixture of a plurality of polypropylene resins, a value obtained by measuring the mixture in the above-described method was used.

### (4) Melt flow rate (MFR)

The melt flow rate (MFR) was measured at a temperature of 230°C and a load of 2.16 kgf in accordance with JISK7210.

As the isotactic mesopentad fraction of the polypropylene-based resin formed of a mixture of a plurality of polypropylene resins, a value obtained by measuring the mixture in the above-described method was used.

### (5) Thickness of all layers of film

The biaxially oriented polypropylene resin film was cut out so as to have a size of 1 cm×1 cm, a sample of the cross-section was produced by a microtome and was observed through a differential interference microscope, and the thicknesses of the base layer (A), the surface layer (B), the intermediate layer (C), and all the layers of the film, were measured. The sample was measured at five positions and the average value was calculated.

### (6) Young's modulus, F5, tensile breaking strength, tensile elongation at break

The biaxially oriented polypropylene resin film was cut out as a film having a size of 200 mm in the longitudinal direction and 15 mm in the width direction, and set in a tensile tester (manufactured by Instron Japan Company Limited: dual column desktop tester Instron 5965) with a chuck width of 100 mm. The tensile test was conducted in a 23°C atmosphere at a tensile rate of 200 mm/minute in accordance with JISK7127.

From the obtained strain-stress curve, a Young's modulus was obtained from the gradient of a straight line portion from start of the elongation to 0.6% elongation. Stress at 5% elongation was set as F5. As the tensile breaking strength and the tensile elongation at break, the strength and the elongation, respectively, at the time when the sample was broken were adopted. Five samples were measured and the average value was calculated.

A sample was cut out so as to have a size of 200 mm in the width direction and 15 mm in the longitudinal direction, and the measurement was similarly performed. In the description herein, the longitudinal direction represents a film flowing direction in a process step from casting a raw material resin composition to taking up the stretched film, and the width direction represents the direction perpendicular to the flowing direction. The same applies to the following measurements.

### (7) Heat shrinkage rate

The biaxially oriented polypropylene resin film was cut out so as to have a size of 200 mm in the longitudinal direction and 20 mm in the width direction, and was hung in a 120°C hot air oven and heated for five minutes, and a length after the heating was measured in accordance with JISZ1712.

A ratio of difference between the length after the heating and an original length before the heating relative to the original length before the heating was set as a heat shrinkage rate. Five samples were measured and the average value was calculated.

The biaxially oriented polypropylene resin film was cut out so as to have a size of 200 mm in the width direction and 20 mm in the longitudinal direction, and the measurement was similarly performed.

### (8) Haze

One surface and the opposite surface of the biaxially oriented polypropylene resin film were measured at 23°C in accordance with JISK7105 by using a haze meter (manufactured by NIPPON DENSHOKU INDUSTRIES CO., LTD.: NDH5000). The average value thereof was calculated.

### (9) Glossiness

For one surface and the opposite surface of the biaxially oriented polypropylene resin film, 60° specular glossiness was measured by using a gloss meter (VG-1D manufactured by NIPPON DENSHOKU INDUSTRIES CO., LTD.) in the longitudinal direction of the film in accordance with JIS K-7105 5.2 Glossiness: 2004. The average value thereof was calculated.

### (10) Coefficient of dynamic friction

The surface layer (B) surfaces of two biaxially oriented polypropylene resin films were stacked with each other, and measured at 23°C in accordance with JIS K7125. Five sets of samples were measured and the average value was calculated.

### (11) Wetting tension (mN/m)

The biaxially oriented polypropylene resin film was cut out so as to have a size of 297 mm in the longitudinal direction and 210 mm in the width direction, and was subjected to aging at a temperature of 23°C and a relative humidity of 50% for 24 hours. Thereafter, a corona-treated surface was measured at a temperature of 23 °C and a relative humidity of 50% in a laboratory atmosphere in the following procedure in accordance with JIS K 7100.

The test piece was placed on a substrate of a hand coater, and a few drops of a test mixture was dropped on the test piece and was immediately spread by drawing a wire bar. In the case of the test mixture being spread by using a swab or a brush, liquid was quickly spread at least over an area of not smaller than 6 cm². Such an amount of the liquid as to form a thin layer without forming a lump was spread.

The wetting tension was determined in a manner in which a liquid film of the test mixture was observed in a bright place and the liquid film was measured after elapse of three seconds. A liquid film that is maintained in a state where the test mixture has been applied without causing breakage of the liquid film for three seconds or longer can be considered to be wet.

In a case where the wet state was maintained for three seconds or longer, a mixture having a surface tension that was one level higher than the most recently used mixture was further used.

Meanwhile, in a case where the liquid film was broken within three seconds, a mixture having a surface tension that was one level lower than the most recently used mixture was subsequently used. This operation was repeated, and a mixture that allowed the surface of the test piece to be precisely wetted in three seconds was selected.

In each test, a new swab was used. A brush or a wire bar was washed with methanol and dried each time it was used since residual liquid changed a composition and the surface tension due to evaporation.

The operation for selecting a mixture that allowed the corona-treated surface to be wetted in three seconds was performed at least three times. The surface tension of the mixture selected in this manner was reported as wetting tension of the film.

### (12) Surface specific resistance value (LogΩ)

The biaxially oriented polypropylene resin film was cut out so as to have a size of 100 mm in the longitudinal direction and 100 mm in the width direction, and the film was subjected to aging at 23°C for 24 hours, and the corona-treated surface of the film was measured in accordance with JIS K6911.

### (13) Antifogging property

1) 300 cc of 50°C hot water was put into a 500 cc container having an opening in an upper portion.
2) The container opening portion was hermetically sealed with the film in a state where a surface of the film for measuring antifogging property was disposed on the inner side.
3) This was left as it was in a cool chamber at 5°C.
4) A dew attaching state on the film surface was evaluated into five grades in a state where the hot water in the container was completely cooled to an ambient temperature.
   - First evaluation grade: no dew was on the entire surface (adhesion area of 0)
   - Second evaluation grade: a small amount of dew was adhered (adhesion area of up to 1/4)
   - Third evaluation grade: dew was adhered on about half the surface (adhesion area of up to 2/4)
   - Fourth evaluation grade: dew was adhered on almost the entire surface (adhesion area of up to 3/4)
   - Fifth evaluation grade: dew was adhered over the entire surface (adhesion area of 3/4 or more)

### (14) Water vapor permeability

The biaxially oriented polypropylene resin film was cut out so as to have a size of 100 mm in the longitudinal direction and 100 mm in the width direction, and a water vapor permeability measurement device (PERMATRAN-W3/33 manufactured by MOCON) was used to perform measurement in a manner in which the corona-treated surface of the film was disposed on a higher humidity side in a condition in which the temperature was 37.8°C and the humidity was 90%. Three samples were measured and the average value was calculated.

### (15) Heat sealing start-up temperature

The biaxially oriented polypropylene resin film was cut out by 20 cm in the longitudinal direction and 5 cm in the width direction. The corona-treated surface layers (B) of the two films having been cut out were stacked so as to oppose each other, a heat gradient tester (manufactured by Toyo Seiki Seisaku-sho, Ltd.) was used, five heat seal bars in which the sealing surface had a size of 3 cm in the long axis direction and 1 cm in the short axis direction were used, each interval between the seal bars was 1 cm in the longitudinal direction, and the five heat seal bars simultaneously performed heat-sealing. The temperatures of the five heat seal bars were set at a pitch of 5°C from 80°C. The heat sealing pressure was 1 kg/cm² and the heat sealing time was one second. The long axis direction of the heat seal bar was parallel to the longitudinal direction of the film, and the heat seal bars were disposed at the center portion of the film in the width direction. A distance between the end portion of the sample in the short axis direction and the seal bar was 0.5 cm.

Similarly, the temperatures of the five heat seal bars were set at a pitch of 5°C from 105°C, and heat sealing was performed.

The center portion of each sealed portion (3 cm× 1 cm) in the longitudinal direction was cut in the width direction by 15 mm, and was attached to upper and lower chucks of a tensile tester (5965 dual column desktop tester manufactured by Instron), and each heat sealing strength was measured (unit was N/15 mm) when the cut portion was pulled at a tensile rate of 200 mm/ min.

A linear graph which had the horizontal axis representing a temperature and the vertical axis representing heat sealing strength was drawn, and a temperature at which the heat sealing strength was 1 N/15 mm was set as a heat sealing start-up temperature. This was performed three times and the average value was calculated.

### (16) Achievable heat sealing strength

The biaxially oriented polypropylene resin film was cut out by 297 mm in the longitudinal direction and 210 mm in the width direction. The corona-treated surface layers (B) of two films having been cut out were stacked so as to oppose each other, and a heat gradient tester (manufactured by Toyo Seiki Seisaku-sho, Ltd.) was used to perform heat-sealing by using a heat seal bar in which the sealing surface had a size of 15 mm in the long axis direction and 30 mm in the short axis direction. The temperature of the heat seal bar was set to 120°C. The heat sealing pressure was 1 kg/cm² and the heat sealing time was one second. The long axis direction of the heat seal bar was parallel to the longitudinal direction of the film, and the heat seal bar was disposed at the center portion of the film in the width direction. Three samples were measured and the average value was calculated. Similar measurement was performed also at 130°C and 140°C

### (17) Blocking value

The biaxially oriented polypropylene resin film was cut out by 150 mm in the longitudinal direction and 200 mm in the width direction, different surfaces were aligned with each other and held on the upper and lower sides, and the films were put in a 60°C oven with a 20 kg weight being placed at the center. The films were taken out after 24 hours and seasoned to a temperature: 23°C and a humidity: 65% for one hour, and a 6.35Φ test bar was fixed to the adhered portion. The films were held such that a holding interval for the film and a fixing tool was 200 mm, and were pulled at a tensile rate of 100 mm/minute by a tensile tester (5965 dual column desktop tester manufactured by Instron), and strength measured when the films were peeled off was set as a blocking value (mN/200 mm). Three samples were measured and the average value was calculated.

### (18) Ring crush value

The biaxially oriented polypropylene resin film was cut out by 152 mm in the longitudinal direction and 12.7 mm in the width direction. A spacer of an attachment was set on a sample table of a digital ring crush tester (manufactured by TESTER SANGYO CO, LTD.) so as to match the thickness of the film sample, and the film sample was set along the circumference such that the long axis is along the circumferential direction. A maximum load measured when the film sample was compressed by a compression plate at a descending speed of 12 mm/min. at 23°C was set as a ring crush measurement value. Three samples were measured and the average value was calculated. The biaxially oriented polypropylene resin film was cut out by 152 mm in the width direction and 12.7 mm in the longitudinal direction, and the measurement was similarly performed.

### (19) Fusion sealing strength

A fusion sealing machine (manufactured by Kyoei Insatsu Kikai Zairyou K.K.: Type PP500) was used to produce a fusion-sealed bag from the biaxially oriented polypropylene resin film such that a corona-treated portion was disposed on the inner side.
Condition: Fusion blade: blade edge angle of 60°
Sealing temperature: 370°C
The number of shots: 120 bags/minute
Bag shape: 20 cm in the longitudinal direction, 20 cm in the horizontal direction, the film width direction was the longitudinal direction.

A fusion-sealed portion on the bottom of the fusion-sealed bag was cut out in the longitudinal direction so as to be 15 mm wide in the horizontal direction, both ends were held by holding portions of a tensile tester (5965 dual column desktop tester manufactured by Instron) at a holding interval of 200 mm without loosening the film, the film was pulled at a tensile rate of 200 mm/minute, and strength measured when the sealed portion was broken was set as the fusion sealing strength (N/15 mm). Five samples were measured and the average value was calculated.

### (20) Surface roughness SRa

A light wave interference type surface roughness meter (NewView 8300 available from Zygo) was used to obtain a surface roughness SRa by measurement with an objective lens: magnification of 50 and image zooming: 1.0×. As an analysis condition, a standard application Mx available from Zygo was used to obtain data in a non-contact manner at three positions of each sample, and the surface roughness was thereafter analyzed.

### (21) Surface roughness Sdq

A light wave interference type surface roughness meter (NewView 8300 available from Zygo) was used to obtain a surface roughness Sdq by measurement with an objective lens: magnification of 50 and image zooming: 1.0×. As an analysis condition, a standard application Mx available from Zygo was used to obtain data in a non-contact manner at three positions of each sample, and the surface roughness was thereafter analyzed.

### (22) High speed packaging suitability

A horizontal pillow bag production machine (manufactured by Kyoei Insatsu Kikai Zairyou K.K.: Type PP500) was used to produce a pillow packaging from the biaxially oriented polypropylene resin film such that a corona-treated portion was disposed on the inner side.
Condition: Fusion blade; blade edge angle of 60°
Sealing temperature; 370°C
The number of shots; 120 bags/minute
Bag shape: 20 cm in the longitudinal direction, 20 cm in the horizontal direction, the film width direction was the longitudinal direction.

Automatic packaging suitability was evaluated into the following three grades according to smoothness for transportation of the film and a degree of wrinkles of the bag product.

Good: film transportation properties were good and the bag product had no wrinkles.

Fair: poor as to one of film transportation properties or wrinkles of the bag product.

Poor: film transportation properties were poor, and the bag product had wrinkles.

Polypropylene resins that constituted the layers and were used in the following examples and comparative examples were as follows.
[PP-1]: propylene homopolymer: "FL203D" manufactured by Japan Polypropylene Corporation, MFR: 3 g/10 minutes, melting point: 160°C, mesopentad fraction: 94.8%
[PP-2]: propylene homopolymer: "FY6H" manufactured by Japan Polypropylene Corporation, MFR: 1.9 g/10 minutes, melting point: 163°C, mesopentad fraction: 98.9%
[PP-3]: propylene-ethylene-butene random copolymer: "FSX66E8" manufactured by Sumitomo Chemical Industry Company Limited, ethylene content: 2.5 mol%, butene content: 7 mol%, MFR: 3.1 g/10 minutes, melting point: 133°C
[PP-4]: propylene-butene-1 copolymer: "SP3731" manufactured by Sumitomo Chemical Industry Company Limited, butene content: 12 mol%, MFR: 8.5 g/10 minutes, melting point: 130°C
[PP-5]: [PP-1] to which 0.16 weight% of glycerol monostearate (Matsumoto Yushi-Seiyaku Co., Ltd., TB-123), 0.2 weight% of polyoxyethylene(2)stearylamine (Matsumoto Yushi-Seiyaku Co., Ltd., TB-12), and 0.6 weight% of polyoxyethylene(2)stearylamine monostearate (Matsumoto Yushi-Seiyaku Co., Ltd., Elex 334) were added.
[PP-6]: [PP-3] to which 0.50 weight% of glycerol monostearate (Matsumoto Yushi-Seiyaku Co., Ltd., TB-123) was added.
[PE-1]: ethylene homopolymer, "SLH218" manufactured by Braskem, MFR: 2.3 g/10 minutes, melting point: 126°C, biobased content: 84%, density: 0.916 g/cm³

### (Example 1)

As the resin for the base layer (A), [PP-5], [PP-2], and [PE-1] were mixed and used at ratios of 54 weight%, 43 weight%, and 3 weight%, respectively.

As the resin for the surface layer (B), [PP-6] and [PP-4] were mixed and used at ratios of 70 weight% and 30 weight%, respectively.

Two melt-extruders were used, the base layer (A) was melt-extruded at a resin temperature of 280°C by a first extruder, and the resin for forming the surface layer (B) was melt-extruded at a resin temperature of 250°C by a second extruder. The surface layer (B)/the base layer (A)/the surface layer (B) were stacked and extruded from a surface in contact with a chill roll in order, respectively, in a T-die, and cooled and solidified by a 30°C cooling roll, to obtain an unstretched sheet. Subsequently, the sheet was stretched 4.5 times between metal rolls heated to 130°C in the longitudinal direction by utilizing difference in a circumferential speed, was further introduced into a tenter stretching machine, and was stretched 9.5 times in the width direction. The temperature of a preheating portion was 175°C, and the temperature of a stretching portion was 165°C in the tenter stretching machine.

After the stretching in the width direction, heat-setting was performed at 165°C. Subsequently, the surface (which was not a surface in contact with the cooling roll) of the surface layer (B) was subjected to corona discharge treatment by using a corona discharge treatment machine manufactured by KASUGA DENKI, INC., and the film was taken up by a film winder, to obtain the biaxially oriented polypropylene resin film. The final film thickness was 35 µm. The thickness ratios of the layers were the surface layer (B)/the base layer (A)/the surface layer (B)=1.2 µm/32.6 µm/1.2 µm.

The biaxially oriented polypropylene resin film having been obtained satisfied the requirements of the present invention, and had high transparency and sufficient achievable heat sealing strength and achieved both high speed packaging suitability and fusion sealing suitability. Table 1 indicates the film composition and results of physical properties.

### (Example 2)

The biaxially oriented polypropylene resin film was obtained in the same manner as in Example 1 except that the thickness ratios of the layers were changed to the surface layer (B)/the base layer (A)/the surface layer (B)=1.5 µm/33.0 µm/1.5 µm. The biaxially oriented polypropylene resin film having been obtained had high transparency and sufficient achievable heat sealing strength, and achieved both high speed packaging suitability and fusion sealing suitability, similarly to Example 1. Table 1 indicates the film composition and results of physical properties.

### (Example 3)

The biaxially oriented polypropylene resin film was obtained in the same manner as in Example 1 except that the thickness ratios of the layers were changed to the surface layer (B)/the base layer (A)/the surface layer (B)=2.0 µm/31.0 µm/2.0 µm. The biaxially oriented polypropylene resin film having been obtained had high transparency and sufficient achievable heat sealing strength, and achieved high speed packaging suitability, fusion sealing suitability, and antifogging property in a well-balanced manner, similarly to Example 1. Table 1 indicates the film composition and results of physical properties.

### (Example 4)

The biaxially oriented polypropylene resin film was obtained in the same manner as in Example 2 except that the thickness ratios of the layers were changed to the surface layer (B)/the intermediate layer (C)/the base layer (A)/the intermediate layer (C)/the surface layer (B)=0.8 µm/2.0 µm/29.4 µm/2.0 µm/0.8 µm. The biaxially oriented polypropylene resin film having been obtained had high transparency and sufficient achievable heat sealing strength, and achieved high-speed packaging suitability, fusion sealing suitability, and antifogging property in a well-balanced manner, similarly to Example 1. Table 1 indicates the film composition and results of physical properties.

### (Example 5)

The biaxially oriented polypropylene resin film was obtained in the same manner as in Example 3 except that the resin components of the base layer (A) were 47 weight% of [PP-5], 43 weight% of [PP-2], and 10 weight% of [PE-1]. The biaxially oriented polypropylene resin film having been obtained had high transparency and sufficient achievable heat sealing strength, and achieved high speed packaging suitability, fusion sealing suitability, and antifogging property in a well-balanced manner, similarly to Example 3. Table 1 indicates the film composition and results of physical properties.

### (Example 6)

The biaxially oriented polypropylene resin film was obtained in the same manner as in Example 1 except that the resin components of the base layer (A) were 37 weight% of [PP-5], 43 weight% of [PP-2], and 20 weight% of [PE-1]. The biaxially oriented polypropylene resin film having been obtained had high transparency and sufficient achievable heat sealing strength, and achieved high speed packaging suitability, fusion sealing suitability, and antifogging property in a well-balanced manner, similarly to Example 3. Table 1 indicates the film composition and results of physical properties.

### (Comparative example 1)

The biaxially oriented polypropylene resin film was obtained in the same manner as in Example 1 except that [PP-5], [PP-2], and [PE-1] were mixed and used at ratios of 54 weight%, 43 weight%, and 3 weight%, respectively, as the resin for the base layer (A), and the thickness ratios of the layers were changed to the surface layer (B)/the base layer (A)/the surface layer (B)=0.8 µm/33.4 µm/0.8 µm. The biaxially oriented polypropylene resin film having been obtained had poor transparency. Table 2 indicates the film composition and results of physical properties.

### (Comparative example 2)

The biaxially oriented polypropylene resin film was obtained in the same manner as in Comparative example 1 except that [PP-5], [PP-2], and [PE-1] were mixed and used at ratios of 47 weight%, 43 weight%, and 10 weight%, respectively, as the resin for the base layer (A). The biaxially oriented polypropylene resin film having been obtained had poor transparency. Table 2 indicates the film composition and results of the physical properties.

### (Comparative example 3)

The biaxially oriented polypropylene resin film was obtained in the same manner as in Comparative example 1 except that [PP-5], [PP-2], and [PE-1] were mixed and used at ratios of 37 weight%, 43 weight%, and 20 weight%, respectively, as the resin for the base layer (A). The biaxially oriented polypropylene resin film having been obtained had poor transparency. Table 2 indicates the film composition and results of the physical properties.

### (Comparative example 4)

The biaxially oriented polypropylene resin film was obtained in the same manner as in Comparative example 1 except that [PP-2], [PP-5], and [PP-1] were mixed and used at ratios of 43 weight%, 57 weight%, and 0 weight%, respectively, as the resin for the base layer (A). The biaxially oriented polypropylene resin film having been obtained had poor transparency. Table 2 indicates the film composition and results of the physical properties.

### (Comparative example 5)

The biaxially oriented polypropylene resin film was obtained in the same manner as in Comparative example 1 except that [PP-2], [PP-5], [PP-2], and [PE-1] were mixed and used at ratios of 0 weight%, 97 weight%, 43 weight%, and 3 weight%, respectively, as the resin for the base layer (A). The biaxially oriented polypropylene resin film having been obtained had poor transparency. Table 2 indicates the film composition and results of the physical properties.

### (Comparative example 6)

The biaxially oriented polypropylene resin film was obtained in the same manner as in Example 5 except that the base layer (A) had a thickness of 32.0 µm, and the surface layer (B) had a thickness of 1.5 µm on each of both surfaces (the entire thickness of the surface layer (B) was 3.0 µm). The biaxially oriented polypropylene resin film having been obtained had poor transparency. Table 2 indicates the film composition and results of physical properties.

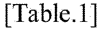

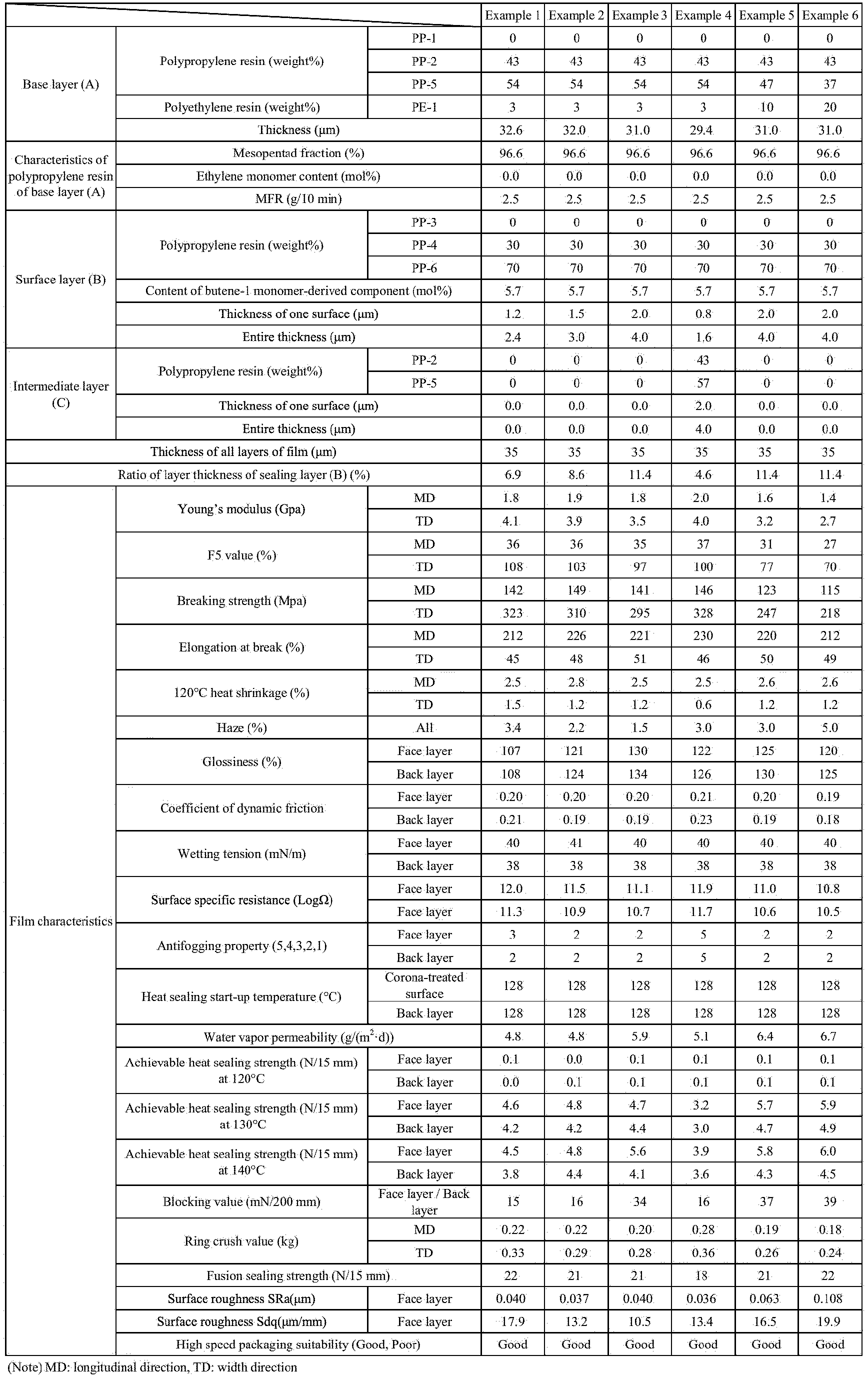

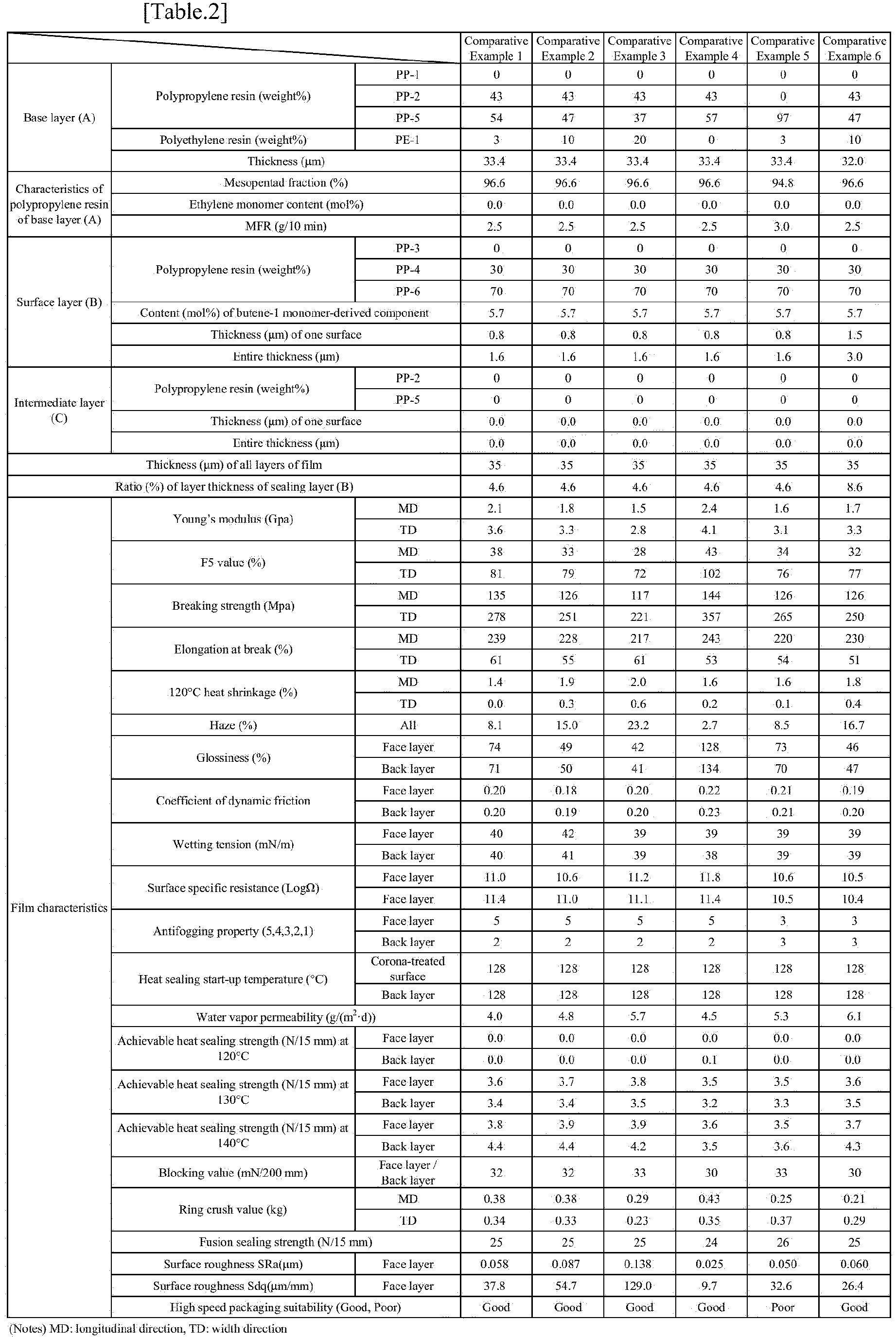

### INDUSTRIAL APPLICABILITY

The polypropylene-based laminated film having high stiffness and antifogging property according to the present invention leads to, for example, contribution to good outer appearance in packaging greengrocery and displaying commodities and environmental contribution by reducing a thickness of the film, and is suitable for packaging greengrocery. Therefore, the present invention greatly contributes to industries.

## Claims

1. A biaxially oriented polypropylene resin film comprising:
a base layer (A) formed of a polypropylene-based resin composition containing polypropylene-based resin and polyethylene-based resin; and
a surface layer (B) disposed on at least one side of the base layer (A), wherein
the biaxially oriented polypropylene resin film satisfies the following conditions a) to d),
a) the polypropylene-based resin having the lowest DSC melting point in the polypropylene-based resin composition constituting the base layer (A) has a melting point peak temperature of not lower than 160°C,
b) a ratio of an α-olefin monomer-derived component to a total of a propylene monomer-derived component and the α-olefin monomer-derived component in the polypropylene-based resin constituting the base layer (A) is not larger than 0.2 mol%,
c) the polyethylene-based resin constituting the base layer (A) is contained in an amount of not smaller than 1 weight% and 20 weight% with respect to 100 weight% of a total of the polypropylene-based resin and the polyethylene-based resin that constitute the base layer (A), and
d) the biaxially oriented polypropylene resin film has a haze of not larger than 7%.

2. A biaxially oriented polypropylene resin film comprising:
a base layer (A) formed of a polypropylene-based resin composition containing polypropylene-based resin and polyethylene-based resin; and
a surface layer (B) disposed on at least one side of the base layer (A), wherein
the biaxially oriented polypropylene resin film satisfies the following conditions a) to d),
a) the polypropylene-based resin constituting the base layer (A) has a mesopentad fraction of not smaller than 95.0% and not larger than 99.5%,
b) a ratio of an α-olefin monomer-derived component to a total of a propylene monomer-derived component and the α-olefin monomer-derived component in the polypropylene-based resin constituting the base layer (A) is not larger than 0.2 mol%,
c) the polyethylene-based resin constituting the base layer (A) is contained in an amount of not smaller than 1 weight% and 25 weight% with respect to 100 weight% of a total of the polypropylene-based resin and the polyethylene-based resin that constitute the base layer (A), and
d) the biaxially oriented polypropylene resin film has a haze of not larger than 7%.

3. The biaxially oriented polypropylene resin film according to claim 1 or 2, comprising an antifogging agent of not smaller than 0.3 weight% and not larger than 1.0 weight%.

4. The biaxially oriented polypropylene resin film according to any one of claims 1 to 3, wherein
the biaxially oriented polypropylene resin film satisfies the following e) and f),
e) a ratio of a butene-1 monomer-derived component to a total of a propylene monomer-derived component and an α-olefin monomer-derived component in a polypropylene-based resin composition constituting the surface layer (B) is not smaller than 5 mol% and not larger than 10 mol%, and
f) the biaxially oriented polypropylene resin film has a thickness of not larger than 60 µm, and a ratio of a thickness of the surface layer (B) to a thickness of all layers of the biaxially oriented polypropylene resin film is not smaller than 3% and not larger than 12%.

5. The biaxially oriented polypropylene resin film according to any one of claims 1 to 4, wherein a melt flow rate (MFR) of an entirety of the polypropylene-based resin composition constituting the base layer (A) is not lower than 2.0 g/10 min and not higher than 4.5 g/10 min.

6. The biaxially oriented polypropylene resin film according to any one of claims 1 to 5, wherein
the polypropylene-based resin composition constituting the base layer (A) contains a plurality of kinds of polypropylene homopolymers,
a mesopentad fraction of the polypropylene homopolymer having the highest mesopentad fraction is not lower than 97.5%, and
a mesopentad fraction of the polypropylene homopolymer having the lowest mesopentad fraction is not higher than 96.5%.

7. The biaxially oriented polypropylene resin film according to any one of claims 1 to 6, wherein the polypropylene-based resin composition constituting the base layer (A) contains at least one polymer selected from the group consisting of a propylene homopolymer, a propylene-ethylene copolymer, a propylene-butene-1 copolymer, a propylene-ethylene-butene-1 copolymer, and a propylene-pentene-1 copolymer.

8. A polypropylene-based laminated film according to any one of claims 1 to 8, wherein the biaxially oriented polypropylene resin film has a Young's modulus of not smaller than 1.4 GPa in a longitudinal direction, and has a Young's modulus of not smaller than 2.7 GPa in a width direction.

9. The polypropylene-based laminated film according to any one of claims 1 to 8, wherein the biaxially oriented polypropylene resin film has a fusion sealing strength of not lower than 15 N/15 mm.

10. The polypropylene-based laminated film according to any one of claims 1 to 9, wherein the biaxially oriented polypropylene resin film has a heat sealing strength of not lower than 3.0 N/15 mm at 130°C.

11. The polypropylene-based laminated film according to any one of claims 1 to 10, wherein the biaxially oriented polypropylene resin film has a heat-sealing strength of not lower than 3.5 N/15 mm at 140°C.

12. A packaging comprising the biaxially oriented polypropylene resin film according to any one of claims 1 to 11.
